(19) Europäisches Patentamt
European Patent Office
Office européen des brevets

(11) EP 4 153 669 B1

(12) EUROPEAN PATENT SPECIFICATION

(45) Date of publication and mention of the grant of the patent:
**06.11.2024 Bulletin 2024/45**

(21) Application number: **21726112.2**

(22) Date of filing: **18.05.2021**

(51) International Patent Classification (IPC):
***C08K 3/016*** *(2018.01)* ***C08L 23/20*** *(2006.01)*
***C08K 3/22*** *(2006.01)* ***H01B 3/44*** *(2006.01)*

(52) Cooperative Patent Classification (CPC):
(C-Sets available)
**C08L 23/20; H01B 3/441;** C08K 3/016;
C08K 2003/2224; C08L 2201/02; C08L 2203/202

(Cont.)

(86) International application number:
**PCT/EP2021/063076**

(87) International publication number:
**WO 2021/233875 (25.11.2021 Gazette 2021/47)**

(54) **HIGHLY FILLED AND FLEXIBLE POLYOLEFIN COMPOSITION**

HOCHGEFÜLLTE UND FLEXIBLE POLYOLEFINZUSAMMENSETZUNG

COMPOSITION DE POLYOLÉFINE HAUTEMENT CHARGÉE ET FLEXIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.05.2020 EP 20176046**

(43) Date of publication of application:
**29.03.2023 Bulletin 2023/13**

(73) Proprietor: **Basell Poliolefine Italia S.r.l.**
**20121 Milano (IT)**

(72) Inventors:
- **MARCHINI, Roberta**
**44122 Ferrara (IT)**
- **MUSACCHI, Gianluca**
**44122 Ferrara (IT)**
- **PASQUALI, Stefano**
**44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**EP-A1- 0 131 358**
**WO-A1-2015/055433**
**WO-A1-2016/188982**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 153 669 B1

(52) Cooperative Patent Classification (CPC): (Cont.)

C-Sets
**C08L 23/20, C08L 23/12, C08K 3/22;**
**C08L 23/20, C08L 23/12, C08L 23/16, C08K 3/22;**
**C08L 23/20, C08L 23/12, C08L 23/16, C08L 51/06, C08K 3/22;**
**C08L 23/20, C08L 23/12, C08L 51/06, C08K 3/22**

## Description

FIELD OF THE INVENTION

The present disclosure relates to a polyolefin composition comprising a high amount of inorganic fillers and having low values of flexural modulus and shore hardness in combination with good tensile properties.

BACKGROUND OF THE INVENTION

Thermoplastic polyolefin compositions having low flexural modulus and shore hardness values have been used in many application fields, due to the valued properties which are typical of polyolefins, such as chemical inertia, mechanical properties and nontoxicity.

In particular, flexible polymer materials are widely used in extrusion coating, electrical wires and cables covering, as well as for packaging and in the medical field.

Mineral fillers, such as aluminum and magnesium hydroxides or calcium carbonate, are commonly used at high concentration levels in said polyolefin compositions for several reasons, for instance to impart self-extinguishing properties or to improve application-related physical properties, such as soft touch and printability.

The major disadvantage of these mineral fillers, in particular when used as flame retardants, is the very high loading needed. Depending on the class of fire-retardancy requested, up to 65-70% by weight of filler can be necessary in order to reach adequate effectiveness in polyolefins. Normally, this has a highly negative influence on the processing of the polymer, with difficulties in adding and dispersing such high levels of filler, and on the physical-mechanical properties of compounds, namely providing lower elongation at break, lower tensile strength and higher brittleness.

WO2015055433 discloses a composition comprising 35 to 65wt% of a heterophasic polyolefin composition, 30 to 80wt% of an inorganic filler and 2 to 25wt% of a 1-butene copolymer. According to WO2012152803, such problem is addressed by combining 15 to 40% by weight of a heterophasic polyolefin composition with 40 to 80% by weight of an inorganic filler and 5 to 25% by weight of an elastomeric polymer, which can be a heterophasic composition as well.

In the examples an amount of heterophasic composition of about 37% by weight or higher is used, made of at least three heterophasic components with different intrinsic viscosities of the fraction soluble in xylene at 25°C of the elastomeric component.

It has now been found that by combining specific butene-1 copolymers and high amounts of mineral fillers with defined weight ratios between the two, it is possible to obtain a flexible polyolefin composition having an excellent and unusual set of properties, without requiring the addition of a heterophasic composition, which needs a multistage polymerization process for its preparation and adds complexity to the polymeric portion of the final composition, with consequent recycling issues.

If a heterophasic composition is used, it is added in low amounts and there is no need of having the previously said three components.

Moreover, the present polyolefin composition achieves an improved processability and better mechanical properties with respect to compositions wherein an ethylene or propylene plastomer is used instead of the butene-1 copolymers.

SUMMARY OF THE INVENTION

The present disclosure provides for a polyolefin composition comprising:

a) from 85% to 98% by weight, preferably from 86% to 98% by weight, of a composition comprising:

A) a copolymer of butene-1 with ethylene having a copolymerized ethylene content of up to 18% by mole and no melting peak detectable at the DSC at the second heating scan; and

B) an inorganic filler, preferably selected from flame-retardant inorganic fillers;

the B)/A) weight ratio being from 0.3 to 4 or from 0.5 to 4, preferably from 0.3 to 3 or 0.5 to 3, more preferably from 0.3 to 2.8 or from 0.5 to 2.8, in particular from 0.3 to 2.2 or from 0.5 to 2.2;

b) from 2% to 15% by weight, preferably from 2 % to 14% by weight, of an additional polyolefin different from A);

wherein the amounts of a) and b) refer to the total weight of a) + b) and the DSC second heating scan is carried out at a heating rate of 10°C per minute.

DETAILED DESCRIPTION OF THE INVENTION

Preferably the present polyolefin composition contains 20% by weight or more, more preferably 27% by weight or more of A) with respect to the total weight of the composition

Most preferred amounts of A) are from 20% to 45% by weight, or from 27% to 45% by weight, with respect to the total weight of the polyolefin composition.

Most preferred amounts of B) are from 40% to 65% by weight, with respect to the total weight of the polyolefin composition.

Preferred values of MIE for the present polyolefin composition are of equal to or higher than 0.05 g/10 min., or equal to or higher than 0.25 g/10 min., in particular from 0.05 to 5 g/10 min., or from 0.25 to 5 g/10 min., or from 0.5 to 5 g/10 min., where MIE is the melt flow index at 190°C with a load of 2.16 kg, determined according to ISO 1133-2:2011.

Preferred values of Flexural Elastic Modulus for the said composition are equal to or lower than 600 MPa, more preferably equal to or lower than 400 MPa, the lower limit being preferably of 80 MPa, measured according to norm ISO 178, 10 days after molding.

Preferred Shore D values for the said composition are equal to or or lower than 52, in particular from 52 to 30.

The tensile elongation at break for the said composition, measured according to ISO 527, is preferably equal to or higher than 135%, more preferably equal to or higher than 200%, the upper limit being preferably of 700%.

The butene-1 copolymer component A) just after it has been melted and cooled does not show a melting peak at the second heating scan. However it is crystallizable, i.e. after about 10 days that it has been melted the polymer shows a measurable melting point and a melting enthalpy measured by Differential Scanning Calorimetry (DSC). In other words the butene-1 copolymer shows no melting temperature attributable to polybutene-1 crystallinity $(TmII)_{DSC}$, measured after cancelling the thermal history of the sample, according to the DSC method described in the experimental section of the present application.

Moreover, the butene-1 copolymer component A) can have at least one of the following additional features:

- a MIE of from 0.5 to 3 g/10 min.;
- a lower limit of the copolymerized ethylene content of 12% by mole;
- a Shore A value equal to or lower than 80, more preferably equal to or lower than 65, in particular from 80 to 40 or from 65 to 40;
- a Shore D value equal to or lower than 20, in particular from 20 to 5;
- a Mw/Mn value, where Mw is the weight average molar mass and Mn is the number average molar mass, both measured by Gel Permeation Chromatography (GPC), equal to or lower than 3, in particular from 3 to 1.5.
- a percentage of butene-1 units in the form of isotactic pentads (mmmm%) greater than 80%, preferably equal to or greater than 85%, even more preferably equal to or greater than 90%, wherein the upper limit is 99%;
- a tensile stress at break, measured according to ISO 527, of from 3 MPa to 20 MPa, more preferably from 4 MPa to 13 MPa;
- a tensile elongation at break, measured according to ISO 527, of from 550% to 1000%; more preferably from 700% to 1000%;
- an intrinsic viscosity (I.V.) equal to or higher than 1dl/g; more preferably equal to or higher than 1.5 dl/g, wherein the upper limit is of 3 dl/g;
- a crystallinity of less than 30% measured via X-ray, more preferably of less than 20%;
- a density of 0.895 $g/cm^3$ or less, more preferably of 0.875 $g/cm^3$ or less; wherein the lower limit is of 0.86 $g/cm^3$; and
- a content of xylene insoluble fraction at 0°C of less than 15% by weight, wherein the lower limit is of 0%;
- a Flexural Elastic Modulus equal to or lower than 20 MPa, the lower limit being preferably of 5MPa.

The butene-1 copolymer component A) can be obtained by polymerizing the monomer(s) in the presence of a metallocene catalyst system obtainable by contacting:

- a stereorigid metallocene compound;
- an alumoxane or a compound capable of forming an alkyl metallocene cation; and, optionally,
- an organo aluminum compound.

Preferably the stereorigid metallocene compound belongs to the following formula (I):

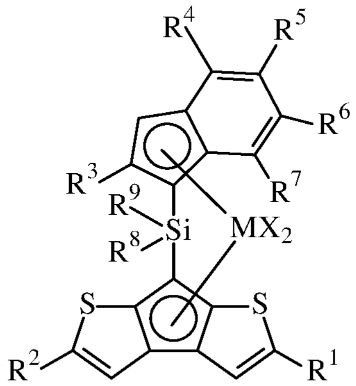

wherein:

M is an atom of a transition metal selected from those belonging to Group 4 of the Periodic Table of Elements; preferably M is zirconium;

X, equal to or different from each other, is a hydrogen atom, a halogen atom, a R, OR, OR'O, $OSO_2CF_3$, OCOR, SR, $NR_2$ or $PR_2$ group wherein R is a linear or branched, saturated or unsaturated $C_1$-$C_{20}$-alkyl, $C_3$-$C_{20}$-cycloalkyl, $C_6$-$C_{20}$-aryl, $C_7$-$C_{20}$-alkylaryl or $C_7$-$C_{20}$-arylalkyl radical, optionally containing heteroatoms belonging to Groups 13-17 of the Periodic Table of the Elements; and R' is a $C_1$-$C_{20}$-alkylidene, $C_6$-$C_{20}$-arylidene, $C_7$-$C_{20}$-alkylarylidene, or $C_7$-$C_{20}$-arylalkylidene radical; preferably X is a hydrogen atom, a halogen atom, a OR'O or R group; more preferably X is chlorine or a methyl radical;

$R^1$, $R^2$, $R^5$, $R^6$, $R^7$, $R^8$ and $R^9$, equal to or different from each other, are hydrogen atoms, or linear or branched, saturated or unsaturated $C_1$-$C_{20}$-alkyl, $C_3$-$C_{20}$-cycloalkyl, $C_6$-$C_{20}$-aryl, $C_7$-$C_{20}$-alkylaryl or $C_7$-$C_{20}$-arylalkyl radicals, optionally containing heteroatoms belonging to Groups 13-17 of the Periodic Table of the Elements; or $R^5$ and $R^6$, and/or $R^8$ and $R^9$ can optionally form a saturated or unsaturated, 5 or 6 membered rings, said ring can bear $C_1$-$C_{20}$ alkyl radicals as substituents; with the proviso that at least one of $R^6$ or $R^7$ is a linear or branched, saturated or unsaturated $C_1$-$C_{20}$-alkyl radical, optionally containing heteroatoms belonging to Groups 13-17 of the Periodic Table of the Elements; preferably a $C_1$-$C_{10}$-alkyl radical;

$R^3$ and $R^4$, equal to or different from each other, are linear or branched, saturated or unsaturated $C_1$-$C_{20}$-alkyl radicals, optionally containing heteroatoms belonging to Groups 13-17 of the Periodic Table of the Elements; preferably $R^3$ and $R^4$ equal to or different from each other are $C_1$-$C_{10}$-alkyl radicals; more preferably $R^3$ is a methyl, or ethyl radical; and $R^4$ is a methyl, ethyl or isopropyl radical.

Preferably the compounds of formula (I) have the general formula (Ia):

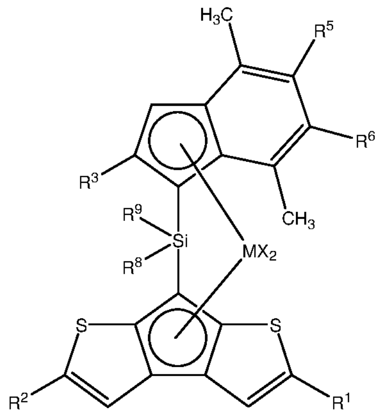

(Ia)

Wherein:

M, X, $R^1$, $R^2$, $R^5$, $R^6$, $R^8$ and $R^9$ have been described above;

$R^3$ is a linear or branched, saturated or unsaturated $C_1$-$C_{20}$-alkyl radical, optionally containing heteroatoms belonging

to groups 13-17 of the Periodic Table of the Elements; preferably $R^3$ is a $C_1$-$C_{10}$-alkyl radical; more preferably $R^3$ is a methyl, or ethyl radical.

Specific examples of metallocene compounds are dimethylsilanediyl{(1-(2,4,7-trimethylindenyl)-7-(2,5-dimethyl-cyclopenta[1,2-b:4,3-b']-dithiophene)} Zirconium dichloride and dimethylsilanediyl{(1-(2,4,7-trimethylindenyl)-7-(2,5-dimethyl-cyclopenta[1,2-b:4,3-b']-dithiophene) (Zirconium dimethyl.

Examples of alumoxanes are methylalumoxane (MAO), tetra-(isobutyl)alumoxane (TIBAO), tetra-(2,4,4-trimethyl-pentyl)alumoxane (TIOAO), tetra-(2,3-dimethylbutyl)alumoxane (TDMBAO) and tetra-(2,3,3-trimethylbutyl)alumoxane (TTMBAO).

Examples of compounds able to form an alkylmetallocene cation are compounds of formula $D^+E^-$, wherein $D^+$ is a Brønsted acid, able to donate a proton and to react irreversibly with a substituent X of the metallocene of formula (I) and $E^-$ is a compatible anion, which is able to stabilize the active catalytic species originating from the reaction of the two compounds, and which is sufficiently labile to be able to be removed by an olefinic monomer. Preferably, the anion $E^-$ comprises of one or more boron atoms.

Examples of organo-aluminum compounds are trimethylaluminum (TMA), triisobutylaluminium (TIBAL), tris(2,4,4-trimethyl-pentyl)aluminum (TIOA), tris(2,3-dimethylbutyl)aluminium (TDMBA) and tris(2,3,3-trimethylbutyl)aluminum (TTMBA).

Examples of the said catalyst system and of polymerization processes employing such catalyst system can be found in WO2004099269 and WO2009000637.

In general, the polymerization process for the preparation of the butene-1 copolymer component A) can be carried out according to known techniques, for example slurry polymerization using as diluent a liquid inert hydrocarbon, or solution polymerization using for example the liquid butene-1 as a reaction medium. Moreover, it may also be possible to carry out the polymerization process in the gas-phase, operating in one or more fluidized bed or mechanically agitated reactors. The polymerization carried out in the liquid butene-1 as a reaction medium is preferred.

As a general rule, the polymerization temperature is generally of from - 100°C to 200°C, preferably from 20°C to 120°C, more preferably from 40°C to 90°C, most preferably from 50°C to 80°C.

The polymerization pressure is generally comprised between 0.5 bar and 100 bar. The polymerization can be carried out in one or more reactors that can work under same or different reaction conditions such as concentration of molecular weight regulator, comonomer concentration, temperature, pressure etc.

In applications where self-extinguishing properties are required, preferred flame-retardant inorganic fillers B) are hydroxides, hydrated oxides, salts or hydrated salts of metals, preferably of Ca, Al or Mg, such as, for example: magnesium hydroxide $Mg(OH)_2$, aluminum hydroxide $A1(OH)_3$, alumina trihydrate $Al_2O_3.3H_2O$, magnesium carbonate hydrate, magnesium carbonate $MgCO_3$, magnesium calcium carbonate hydrate, magnesium calcium carbonate, or mixtures thereof.

$Mg(OH)_2$, $Al(OH)_3$, $Al_2O_3.3H_2O$ and mixtures thereof are particularly preferred.

The metal hydroxides, in particular the magnesium and aluminium hydroxides, are preferably used in the form of particles with sizes which can range between 0.1 and 100 $\mu$m, preferably between 0.5 and 10 $\mu$m.

One inorganic filler which is particularly preferred is a precipitated magnesium hydroxide, having specific surface area of from 1 to 20 $m^2/g$, preferably from 3 to 10 $m^2/g$, an average particle diameter ranging from 0.5 to 15 $\mu$m, preferably from 0.6 to 1 $\mu$m.

The Precipitated magnesium hydroxide generally contains very low amounts of impurities deriving from salts, oxides and/or hydroxides of other metals, such as Fe, Mn, Ca, Si, V, etc. The amount and nature of such impurities depend on the origin of the starting material. The degree of purity is generally between 90 and 99% by weight.

The filler can be advantageously used in the form of coated particles. Coating materials preferably used are saturated or unsaturated fatty acids containing from 8 to 24 carbon atoms, and metal salts thereof, such as, oleic acid, palmitic acid, stearic acid, isostearic acid, lauric acid, and magnesium or zinc stearate or oleate.

Other examples of inorganic oxides or salts are preferably CaO, $TiO_2$, $Sb_2O_3$, ZnO, $Fe_2O_3$, $CaCO_3$, $BaSO_4$ and mixtures thereof.

The polyolefin b) is preferably selected from the following polymers and polymer compositions

1) propylene homopolymers;
2) copolymers of propylene with one or more comonomers selected from ethylene and $C_4$-$C_{10}$ alpha-olefins, wherein the comonomer content ranges from 0.05% to 20% by weight with respect to the total weight of the copolymer, or mixtures of said copolymers with propylene homopolymers 1);
3) heterophasic polyolefin compositions comprising i) a propylene homopolymer 1) and/or a copolymer 2), and an elastomeric fraction ii) comprising copolymers of ethylene with propylene and/or a $C_4$-$C_{10}$ alpha-olefin, optionally containing minor amounts of a diene, such as butadiene, 1,4-hexadiene, 1,5-hexadiene, ethylidene-1-norbornene.

The said $C_4$-$C_{10}$ alpha-olefins are selected from olefins having formula $CH_2$=CHR wherein R is an alkyl radical, linear or branched, or an aryl radical, having from 2 to 8 carbon atoms.

Specific examples of $C_4$-$C_{10}$ alpha-olefins are butene-1, pentene-1, 4-methylpentene-1, hexene-1 and octene-1.

The preferred comonomers are ethylene, butene-1 and hexene-1.

The propylene homopolymers 1) are preferably crystalline homopolymers, having in particular a stereoregularity of isotactic type.

They preferably have a content of fraction soluble in xylene at 25°C of 10% by weight or less, in particular from 10% to 0.5% by weight or from 10% to 1% by weight, referred to the total weight of the propylene homopolymer.

The propylene copolymers 2) are preferably crystalline, random copolymers , having in particular a stereoregularity of isotactic type.

They preferably have a content of fraction soluble in xylene at 25°C of 15% by weight or less, in particular from 15% to 5% by weight, referred to the total weight of the propylene copolymer.

Both the propylene homopolymers 1) and the propylene copolymers 2) have preferably MIL values of from 0.5 to 100 g/10 min, more preferably from 1 to 50 g/10 min., where MIL is the melt flow index at 230°C with a load of 2.16 kg, determined according to ISO 1133-2:2011.

Both the said propylene homopolymers 1) and the propylene copolymers 2) are known in the art and commercially available.

Examples of commercially available homopolymers and copolymers of propylene are the polymer products sold by the LyondellBasell Industries with the trademark Moplen.

They can be prepared by using a Ziegler-Natta catalyst or a metallocene-based catalyst system in the polymerization process.

Typically a Ziegler-Natta catalyst comprises the product of the reaction of an organometallic compound of group 1, 2 or 13 of the Periodic Table of elements with a transition metal compound of groups 4 to 10 of the Periodic Table of Elements (new notation). In particular, the transition metal compound can be selected among compounds of Ti, V, Zr, Cr and Hf and is preferably supported on $MgCl_2$.

Particularly preferred catalysts comprise the product of the reaction of said organometallic compound of group 1, 2 or 13 of the Periodic Table of elements, with a solid catalyst component comprising a Ti compound and an electron donor compound supported on $MgCl_2$.

Preferred organometallic compounds are the aluminum alkyl compounds.

Thus preferred Ziegler-Natta catalysts are those comprising the product of reaction of:

1) a solid catalyst component comprising a Ti compound, preferably a halogenated Ti compound, in particular $TiCl_4$, and an electron donor (internal electron-donor) supported on $MgCl_2$;
2) an aluminum alkyl compound (cocatalyst); and, optionally,
3) an electron-donor compound (external electron-donor).

The solid catalyst component (1) contains as electron-donor a compound generally selected among the ethers, ketones, lactones, compounds containing N, P and/or S atoms, and mono- and dicarboxylic acid esters.

Catalysts having the above mentioned characteristics are well known in the patent literature; particularly advantageous are the catalysts described in US patent 4,399,054 and European patent 45977.

Particularly suited among the said electron-donor compounds are phthalic acid esters, preferably diisobutyl phthalate, and succinic acid esters.

Other electron-donors particularly suited are the 1,3-diethers, as illustrated in published European patent applications EP-A-361 493 and 728769.

As cocatalysts (2), one preferably uses the trialkyl aluminum compounds, such as Al-triethyl, Al-triisobutyl and Al-tri-n-butyl.

The electron-donor compounds (3) that can be used as external electron-donors (added to the Al-alkyl compound) comprise the aromatic acid esters (such as alkylic benzoates), heterocyclic compounds (such as the 2,2,6,6-tetramethylpiperidine and the 2,6-diisopropylpiperidine), and in particular silicon compounds containing at least one Si-OR bond (where R is a hydrocarbon radical).

Examples of the said silicon compounds are those of formula $R^1_aR^2_bSi(OR^3)_c$, where a and b are integer numbers from 0 to 2, c is an integer from 1 to 3 and the sum (a+b+c) is 4; $R^1$, $R^2$ and $R^3$ are alkyl, cycloalkyl or aryl radicals with 1-18 carbon atoms optionally containing heteroatoms.

Useful examples of silicon compounds are (tert-butyl)$_2$Si($OCH_3$)$_2$, (cyclohexyl)(methyl)Si ($OCH_3$)$_2$, (phenyl)$_2$Si($OCH_3$)$_2$ and (cyclopentyl)$_2$Si($OCH_3$)$_2$.

The previously said 1,3- diethers are also suitable to be used as external donors. In the case that the internal donor is one of the said 1,3-diethers, the external donor can be omitted.

The catalysts may be precontacted with small quantities of olefin (prepolymerization), maintaining the catalyst

in suspension in a hydrocarbon solvent, and polymerizing at temperatures from room to 60 °C, thus producing a quantity of polymer from 0.5 to 3 times the weight of the catalyst.

The operation can also take place in liquid monomer, producing, in this case, a quantity of polymer up to 1000 times the weight of the catalyst.

The polymerization process, which can be continuous or batch, is carried out in the presence of said catalysts following known techniques and operating in liquid phase, in the presence or not of inert diluent, or in gas phase, or by mixed liquid-gas techniques.

Polymerization reaction time, pressure and temperature are not critical, however it is best if the temperature is from 20 to 100°C. The pressure can be atmospheric or higher.

The regulation of the molecular weight, resulting into the said MIL values, is carried out by using known regulators, hydrogen in particular.

Preferred examples of metallocene-based catalyst systems are disclosed in US20060020096 and WO98040419.

The polymerization conditions for preparing the homopolymers or copolymers of propylene with metallocene-based catalyst systems in general do not need to be different from those used with Ziegler-Natta catalysts.

Preferred examples of heterophasic polyolefin composition 3) are compositions comprising:

i) one or more propylene polymers selected from propylene homopolymers 1) or copolymers of propylene 2) as previously defined, or their combinations, and

ii) a copolymer or a composition of copolymers of ethylene with propylene and/or a $C_4$-$C_{10}$ alpha-olefin and optionally with minor amounts of a diene (preferably from 1 to 10% by weight with respect to the weight of ii)), said copolymer or composition containing 15% by weight or more, preferably from 15% to 90% by weight, in particular from 25 to 85% by weight of ethylene with respect to the weight of ii).

Particularly preferred examples of said heterophasic polyolefin composition are those containing from 40 to 90% by weight of component i) and 10 to 60% by weight of component ii), referred to the total weight of i) + ii).

The heterophasic composition preferably has a MIL ranging from 0.1 to 50 g/10 minutes, more preferably from 0.5 to 20 g/10 minutes.

The elongation at break of the heterophasic composition is preferably from 100% to 1000%.

The flexural modulus of the heterophasic composition is preferably from500 to 1500 MPa, more preferably from 700 to 1500 MPa.

The copolymer or composition of copolymers (ii) has preferably a solubility in xylene at 25°C of from 40% to 100% by weight, more preferably from 50% to 100% by weight, referred to the total weight of (ii).

Said heterophasic compositions are known in the art and commercially available.

Examples of commercially available heterophasic compositions are the polymer products sold by the Lyondell-Basell Industries with the trademark Moplen.

They can be prepared by blending components (i) and (ii) in the molten state, that is to say at temperatures greater than their softening or melting point, or more preferably by sequential polymerization in the presence of a highly stereospecific Ziegler-Natta catalyst as previously described.

Other catalysts that may be used are metallocene-type catalysts, as described in USP 5,324,800 and EP-A-O 129 368; particularly advantageous are bridged bis-indenyl metallocenes, for instance as described in USP 5,145,819 and EP-A-O 485 823. These metallocene catalysts may be used in particular to produce the component (ii). The above mentioned sequential polymerization process for the production of the heterophasic composition comprises at least two stages, where in one or more stage(s) propylene is polymerized, optionally in the presence of the said $C_4$-$C_{10}$ alpha-olefin comonomer(s), to form component (i), and in one or more additional stage(s) mixtures of ethylene with propylene and/or a $C_4$-$C_{10}$ alpha-olefin, and optionally diene, are polymerized to form component (ii).

The polymerization processes are carried out in liquid, gaseous, or liquid/gas phase. The reaction temperature in the various stages of polymerization can be equal or different, and generally ranges from 40 to 90 °C, preferably from 50 to 80 °C for the production of component (i), and from 40 to 60 °C for the production of component (ii). Examples of sequential polymerization processes are described in European patent applications EP-A-472946 and EP-A-400333 and in WO03/011962.

In order to enhance the compatibility between the inorganic filler and the polymer components, a coupling agent c) may be added in the present polyolefin composition.

Said coupling agents may be made of or comprise saturated silane compounds or silane compounds containing at least one ethylenic unsaturation, epoxides containing an ethylenic unsaturation, organic titanates, mono-or dicarboxylic acids containing at least one ethylenic unsaturation, or derivatives thereof such as anhydrides or esters.

Preferred coupling agents c) are homopolymers and copolymers of alpha-olefins (for example butene-1 homopolymers or copolymers of butene-1 with an alpha-olefin, ethylene homopolymers or copolymers of ethylene with

an alpha-olefin) containing polar groups, in particular carboxyl, hydroxyl, or ester groups.

Said coupling agents can be obtained by grafting mono-or dicarboxylic acids containing at least one ethylenic unsaturation, or derivatives thereof (for example, maleic acid, fumaric acid, citraconic acid, itaconic acid, acrylic acid, methacrylic acid and the anhydrides or esters derived therefrom, or mixtures thereof) on the said homopolymers and copolymers of alpha-olefins.

Homopolymers and copolymers of alpha-olefins grafted with maleic anhydride are particularly preferred.

Grafting can be obtained by means of a radical reaction (as described for instance in EP-A-530 940).

The amount of coupling agent c) is preferably of 0.1% to 10% by weight, referred to the total weight of a) + b) +c).

The present polyolefin composition can be prepared by mixing the polymer components, the filler and the other optional components according to methods known in the state of the art. For instance, the components may be mixed in an internal mixer having tangential rotors (such as Banbury mixers) or having interpenetrating rotors, or alternatively in continuous mixers (such as Buss mixers) or co- rotating or counter-rotating twin-screw extruders.

Mixing or extrusion temperatures generally applied are from 160°C to 220°C.

In fields where self-extinguishing properties are required, the present polyolefin composition may be used in applications such as electrical wires and cables covering, for instance as inner filling for industrial cables, reinforced and non- reinforced roofing membranes and adhesive tapes.

Where flame-retardancy is not requested, the present polyolefin composition may be advantageously used in non flame-retardant soft membranes, coupled or non-coupled with a reinforcement (e. g. in publicity banners, liners, tarpaulin, sport-wear and safety clothing) and as synthetic leather.

Moreover, the present polyolefin composition may be used in packaging and extrusion coating.

Conventional additives commonly used in the state of the art may be added to the present polyolefin composition.

Depending on the properties needed for the different applications, the present polyolefin composition may be used in combination with elastomeric polymers such as ethylene/propylene copolymers (EPR), ethylene/propylene/diene terpolymers (EPDM), copolymers of ethylene with $C_4$-$C_{l2}$ alpha-olefins (e. g. ethylene/octene-1 copolymers, such as the ones commercialized under the name Engage) and mixtures thereof.

Conventional additives such as processing aids, lubricants, nucleating agents, extension oils, organic and inorganic pigments, anti-oxidants and UV-protectors, commonly used in olefin polymers, may be added.

Processing aids usually added to the polymer material are, for example, calcium stearate, zinc stearate, stearic acid, paraffin wax, synthetic oil and silicone rubbers.

Examples of suitable antioxidants are pentaerythritol tetrakis(3-(3,5-di-tert-butyl-4-hydroxyphenyl)propionate and 1,2-bis(3,5-di-tert-butyl-4-hydroxyhydrocinnamoyl)hydrazine.

Other fillers which can be used are, for example, glass particles, glass fibers, calcinated kaolin and talc.

## EXAMPLES

The practice and advantages of the various embodiments, compositions and methods as provided herein are disclosed below in the following examples. These Examples are illustrative only, and are not intended to limit the scope of the invention in any manner whatsoever.

The following analytical methods are used to characterize the polymer compositions.

### Thermal properties (melting temperatures and enthalpies)

Determined by Differential Scanning Calorimetry (DSC) on a Perkin Elmer DSC-7 instrument.

The melting temperature (TmII) of the butene-1 copolymer A) was determined according to the following method:

- TmII (measured in second heating scan): a weighted sample (5-10 mg) was sealed into aluminum pans and heated at 200°C with a scanning speed corresponding to 10°C/minute. The sample was kept at 200°C for 5 minutes to allow a complete melting of all the crystallites thus cancelling the thermal history of the sample. Successively, after cooling to -20°C with a scanning speed corresponding to 10°C/minute, the peak temperature was taken as crystallization temperature ($T_c$). After standing 5 minutes at -20°C, the sample was heated for the second time to 200°C with a scanning speed corresponding to 10°C/min. In this second heating run, the peak temperature, when present, is taken as the melting temperature of the polybutene-1 (PB) crystalline form II (TmII) and the area as the global melting enthalpy (ΔHfII).

The butene-1 copolymer component A) of the present polyolefin composition does not have a TmII peak.

MIE

Determined according to norm ISO 1133-2:2011 with a load of 2.16 kg at 190 °C.

MIL

Determined according to norm ISO 1133-2:2011 with a load of 2.16 kg at 230 °C.

Flexural elastic modulus

According to norm ISO 178:2019, measured 10 days after molding.

Tensile Elastic Modulus (MET-DMTA)

Determined at 23°C via DMTA analysis according to ISO 6721-4:2019 on 1mm thick compression molded plaque.

Shore A and D

According to norm ISO 868:2003, measured 10 days after molding.

Tensile stress and elongation at break

According to norm ISO 527-1:2019 on compression molded plaques, measured 10 days after molding.

Intrinsic viscosity

Determined according to norm ASTM D 2857-16 in tetrahydronaphthalene at 135 °C.

Density

Determined according to norm ISO 1183-1:2019 at 23°C.

Comonomer contents

Determined by IR spectroscopy or by NMR.

Particularly for the butene-1 copolymers the amount of comonomer is calculated from the $^{13}C$-NMR spectra of the copolymers. Measurements were performed on a polymer solution (8-12 wt%) in dideuterated 1,1,2,2-tetrachloroethane at 120 °C. The $^{13}C$ NMR spectra were acquired on a Bruker AV-600 spectrometer operating at 150.91 MHz in the Fourier transform mode at 120 °C using a 90° pulse, 15 seconds of delay between pulses and CPD (WALTZ16) to remove $^{1}H$-$^{13}C$ coupling. About 1500 transients were stored in 32K data points using a spectral window of 60 ppm (0-60 ppm).

Copolymer Composition

Diad distribution is calculated from $^{13}C$ NMR spectra using the following relations:

- $$PP = 100\ I_1/\Sigma$$
- $$PB = 100\ I_2/\Sigma$$
- $$BB = 100\ (I_3 - I_{19})/\Sigma$$
- $$PE = 100\ (I_5 + I_6)/\Sigma$$

- $$BE = 100\ (I_9 + I_{10})/\Sigma$$
- $$EE = 100\ (0.5(I_{15} + I_6 + I_{10}) + 0.25\ (I_{14}))/\Sigma$$
- Where $\Sigma = I_1 + I_2 + I_3 - I_{19} + I_5 + I_6 + I_9 + I_{10} + 0.5(I_{15} + I_6 + I_{10}) + 0.25\ (I_{14})$
- The molar content is obtained from the diads using the following relations:
- $$P\ (m\%) = PP + 0.5\ (PE+PB)$$
- $$B\ (m\%) = BB + 0.5\ (BE+PB)$$
- $$E\ (m\%) = EE + 0.5\ (PE+BE)$$

$I_1$, $I_2$, $I_3$, $1_5$, $I_6$, $I_9$, $I_6$, $I_{10}$, $I_{14}$, $I_{15}$, $I_{19}$ are integrals of the peaks in the $^{13}C$ NMR spectrum (peak of EEE sequence at 29.9 ppm as reference). The assignments of these peaks are made according to J.C. Randal, Macromol. Chem Phys., C29, 201 (1989), M. Kakugo, Y. Naito, K. Mizunuma and T. Miyatake, Macromolecules, 15, 1150, (1982), and H.N. Cheng, Journal of Polymer Science, Polymer Physics Edition, 21, 57 (1983). They are collected in Table A (nomenclature according to C.J. Carman, R.A. Harrington and C.E. Wilkes, Macromolecules, 10, 536 (1977)).

Table A.

| I | Chemical Shift (ppm) | Carbon | Sequence |
|---|---|---|---|
| **1** | 47.34 - 45.60 | $S_{\alpha\alpha}$ | PP |
| **2** | 44.07 - 42.15 | $S_{\alpha\alpha}$ | PB |
| **3** | 40.10 - 39.12 | $S_{\alpha\alpha}$ | BB |
| **4** | 39.59 | $T_{\delta\delta}$ | EBE |
| **5** | 38.66 - 37.66 | $S_{\alpha\gamma}$ | PEP |
| **6** | 37.66 - 37.32 | $S_{\alpha\delta}$ | PEE |
| **7** | 37.24 | $T_{\beta\delta}$ | BBE |
| **8** | 35.22 - 34.85 | $T_{\beta\beta}$ | XBX |
| **9** | 34.85 - 34.49 | $S_{\alpha\gamma}$ | BBE |
| **10** | 34.49 - 34.00 | $S_{\alpha\delta}$ | BEE |
| **11** | 33.17 | $T_{\delta\delta}$ | EPE |
| **12** | 30.91 - 30.82 | $T_{\beta\delta}$ | XPE |
| **13** | 30.78 - 30.62 | $S_{\gamma\gamma}$ | XEEX |
| **14** | 30.52 - 30.14 | $S_{\gamma\delta}$ | XEEE |
| **15** | 29.87 | $S_{\delta\delta}$ | EEE |
| **16** | 28.76 | $T_{\beta\beta}$ | XPX |
| **17** | 28.28 - 27.54 | $2B_2$ | XBX |
| **18** | 27.54 - 26.81 | $S_{\beta\delta} + 2B_2$ | BE, PE, BBE |
| **19** | 26.67 | $2B_2$ | EBE |

(continued)

| I | Chemical Shift (ppm) | Carbon | Sequence |
|---|---|---|---|
| **20** | 24.64 - 24.14 | $S_{\beta\beta}$ | XEX |
| **21** | 21.80 - 19.50 | $CH_3$ | P |
| **22** | 11.01 - 10.79 | $CH_3$ | B |

For the propylene copolymers the comonomer content is determined by infrared spectroscopy by collecting the IR spectrum of the sample vs. an air background with a Fourier Transform Infrared spectrometer (FTIR). The instrument data acquisition parameters are:

- purge time: 30 seconds minimum;
- collect time: 3 minutes minimum;
- apodization: Happ-Genzel;
- resolution: 2 $cm^{-1}$.

Sample Preparation

Using a hydraulic press, a thick sheet is obtained by pressing about g 1 of sample between two aluminum foils. If homogeneity is in question, a minimum of two pressing operations are recommended. A small portion is cut from this sheet to mold a film. Recommended film thickness ranges between 0.02-:0.05 cm (8 - 20 mils).

Pressing temperature is 180$\pm$10°C (356°F) and about 10 $kg/cm^2$ (142.2 PSI) pressure for about one minute. Then the pressure is released and the sample is removed from the press and cooled the room temperature.

The spectrum of a pressed film of the polymer is recorded in absorbance vs. wavenumbers ($cm^{-1}$). The following measurements are used to calculate ethylene and butene-1 content:

- Area (At) of the combination absorption bands between 4482 and 3950 $cm^{-1}$ which is used for spectrometric normalization of film thickness.
- If ethylene is present, Area (AC2) of the absorption band between 750-700 $cm^{-1}$ after two proper consecutive spectroscopic subtractions of an isotactic non additivated polypropylene spectrum and then, if butene-1 is present, of a reference spectrum of a butene-1-propylene random copolymer in the range 800-690 $cm^{-1}$.
- If butene-1 is present, the height (DC4) of the absorption band at 769 $cm^{-1}$ (maximum value), after two proper consecutive spectroscopic subtractions of an isotactic non additivated polypropylene spectrum and then, if ethylene is present, of a reference spectrum of an ethylene-propylene random copolymer in the range 800-690 $cm^{-1}$.

In order to calculate the ethylene and butene-1content, calibration straight lines for ethylene and butene-1 obtained by using samples of known amount of ethylene and butene-1 are needed.

Mw/Mn determination by GPC

The determination of the means Mn and Mw, and Mw/Mn derived therefrom was carried out using a Waters GPCV 2000 apparatus, which was equipped with a column set of four PLgel Olexis mixed-gel (Polymer Laboratories) and an IR4 infrared detector (PolymerChar). The dimensions of the columns were 300 $\times$ 7.5 mm and their particle size 13 $\mu$m. The mobile phase used was 1-2-4-trichlorobenzene (TCB) and its flow rate was kept at 1.0 ml/min. All the measurements were carried out at 150°C. Solution concentrations were 0.1 g/dl in TCB and 0.1 g/l of 2,6-diterbuthyl-*p*-chresole were added to prevent degradation. For GPC calculation, a universal calibration curve was obtained using 10 polystyrene (PS) standard samples supplied by Polymer Laboratories (peak molecular weights ranging from 580 to 8500000). A third order polynomial fit was used for interpolating the experimental data and obtaining the relevant calibration curve. Data acquisition and processing was done using Empower (Waters). The Mark-Houwink relationship was used to determine the molecular weight distribution and the relevant average molecular weights: the $K$ values were $K_{PS}$ = 1.21 $\times$ $10^{-4}$ dL/g and $K_{PB}$ = 1.78 $\times$ $10^{-4}$ dL/g for PS and PB respectively, while the Mark-Houwink exponents $\alpha$ = 0.706 for PS and $\alpha$ = 0.725 for PB were used.

For butene-1/ethylene copolymers, as far as the data evaluation is concerned, it is assumed that the composition is constant in the whole range of molecular weight and the K value of the Mark-Houwink relationship is calculated using a linear combination as reported below:

$$K_{EB} = x_E K_{PE} + x_P K_{PB}$$

where $K_{EB}$ is the constant of the copolymer, $K_{PE}$ ($4.06 \times 10^{-4}$, dL/g) and $K_{PB}$ ($1.78 \times 10^{-4}$ dl/g) are the constants of polyethylene and polybutene and $x_E$ and $x_B$ are the ethylene and the butene-1 weight% content. The Mark-Houwink exponents $\alpha$ = 0.725 is used for all the butene-1/ethylene copolymers independently of their composition.

Fractions soluble and insoluble in xylene at 0°C (XS-0°C)

2.5 g of the polymer sample are dissolved in 250 ml of xylene at 135°C under agitation. After 30 minutes the solution is allowed to cool to 100°C, still under agitation, and then placed in a water and ice bath to cool down to 0°C. Then, the solution is allowed to settle for 1 hour in the water and ice bath. The precipitate is filtered with filter paper. During the filtering, the flask is left in the water and ice bath so as to keep the flask inner temperature as near to 0°C as possible. Once the filtering is finished, the filtrate temperature is balanced at 25°C, dipping the volumetric flask in a water-flowing bath for about 30 minutes and then, divided in two 50 ml aliquots. The solution aliquots are evaporated in nitrogen flow, and the residue dried under vacuum at 80° C until constant weight is reached. The weight difference in between the two residues must be lower than 3%; otherwise the test has to be repeated. Thus, one calculates the percent by weight of polymer soluble (Xylene Solubles at 0°C = XS 0°C) from the average weight of the residues. The insoluble fraction in o-xylene at 0°C (xylene Insolubles at 0°C = XI%0°C) is:

$$\text{XI\%0°C} = 100 - \text{XS\%0°C}.$$

Fractions soluble and insoluble in xylene at 25 °C (XS-25°C)

2.5 g of polymer are dissolved in 250 ml of xylene at 135° C under agitation. After 20 minutes the solution is allowed to cool to 25° C, still under agitation, and then allowed to settle for 30 minutes. The precipitate is filtered with filter paper, the solution evaporated in nitrogen flow, and the residue dried under vacuum at 80° C until constant weight is reached. Thus, one calculates the percent by weight of polymer soluble (Xylene Solubles - XS) and insoluble at room temperature (25° C).

The percent by weight of polymer insoluble in xylene at room temperature (25°C) is considered the isotactic index of the polymer. This value corresponds substantially to the isotactic index determined by extraction with boiling n-heptane, which by definition constitutes the isotactic index of polypropylene polymers.

Determination of isotactic pentads content

50 mg of each sample were dissolved in 0.5 ml of $C_2D_2Cl_4$.

The $^{13}C$ NMR spectra were acquired on a Bruker DPX-400 (100.61 Mhz, 90° pulse, 12s delay between pulses). About 3000 transients were stored for each spectrum; the mmmm pentad peak (27.73 ppm) was used as the reference.

The microstructure analysis was carried out as described in the literature (Macromolecules 1991, 24, 2334-2340, by Asakura T. et al. and Polymer, 1994, 35, 339, by Chujo R. et al.).

The percentage value of pentad tacticity (mmmm%) for butene-1 copolymers is the percentage of stereoregular pentads (isotactic pentad) as calculated from the relevant pentad signals (peak areas) in the NMR region of branched methylene carbons (around 27.73 ppm assigned to the BBBBB isotactic sequence), with due consideration of the superposition between stereoirregular pentads and of those signals, falling in the same region, due to the comonomer.

Determination of X-ray crystallinity

The X-ray crystallinity was measured with an X-ray Diffraction Powder Diffractometer using the Cu-K$\alpha$1 radiation with fixed slits and collecting spectra between diffraction angle $2\Theta$ = 5° and $2\Theta$ = 35° with step of 0.1° every 6 seconds.

Measurements were performed on compression molded specimens in the form of disks of about 1.5-2.5 mm of thickness and 2.5-4.0 cm of diameter. These specimens are obtained in a compression molding press at a temperature of 200°C $\pm$ 5°C without any appreciable applied pressure for 10 minutes, then applying a pressure of about 10 kg/cm$^2$ for about few second and repeating this last operation 3 times.

The diffraction pattern was used to derive all the components necessary for the degree of crystallinity by defining a suitable linear baseline for the whole spectrum and calculating the total area (Ta), expressed in counts/sec·$2\Theta$, between the spectrum profile and the baseline. Then a suitable amorphous profile was defined, along the whole spectrum, that separate, according to the two phase model, the amorphous regions from the crystalline ones. Thus it is possible to

calculate the amorphous area (Aa), expressed in counts/sec·2Θ, as the area between the amorphous profile and the baseline; and the crystalline area (Ca), expressed in counts/sec·2Θ, as Ca = Ta- Aa

The degree of crystallinity of the sample was then calculated according to the formula:

$$\%Cr = 100 \text{ x } Ca / Ta$$

**Examples 1-6 and Comparative Example 1**

Materials used in the examples

PP: homopolymer of propylene having MIL of about 10 g/10 min., XS-25°C of 2% by weight.

HECO: heterophasic polyolefin compositions having MIL of 0.8 g/10 min., flexural modulus of 1075 MPa and XS-25°C of 18% by weight, made of:

i) 83% by weight of a propylene homopolymer;
ii) 17% by weight of a copolymer of propylene with ethylene, containing 40% by weight of ethylene.

ENGAGE: ethylene-octene copolymer plastomer having MIL of 0.5 g/10 min., sold by Dow with trademark ENGAGE 8150.

PB-1: butene-1/ethylene copolymer containing 16% by moles of copolymerized ethylene, produced according to the process described in WO2009000637 and in-line blended with a propylene copolymer composition (I) added in amount of 7% by weight with respect to the total weight of the butene- 1/ethylene copolymer and the propylene copolymer composition (I).

Such propylene copolymer composition (I) has MFRL of 5.5 g/10 min., total copolymerized ethylene content of 3% by weight, total copolymerized butene-1 content of 6% by weight; XS-25°C of 19% by weight and $T_m$ of 133°C, and is made of the following two components:

I') 35% by weight of a copolymer of propylene with ethylene (3.2% by weight in the copolymer), and
I") 65% by weight of a copolymer of propylene with ethylene (3.2% by weight in the copolymer) and butene-1 (6% by weight in the copolymer);

wherein the amounts of I') and I") are referred to the total weight of I') + I").
The copolymer composition (I) does not have a meaningful effect on the thermal and mechanical properties of the butene-1/ethylene copolymer.
In fact, no melting peak is detected in the DSC analysis (second scan) of the above described PB-1.
Table 1 reports the main properties of PB-1.

MDH: magnesium hydroxide having average particle size of 0.7-1.1 μm, purity 97-99%, sold by Kyowa Chemical Industry with trademark Kisuma 5A.

C. Agent Coupling Agent sold by BYK with trademark SCONA TSPB 5003 GA. It is a butene-1 homopolymer grafted with maleic anhydride, containing about 1% by weight of maleic anhydride.

Stabilizer 1: pentaerythritol tetrakis(3-(3,5-di-tert-butyl-4-hydroxyphenyl)propionate, sold by BASF with trademark Irganox 1010.

Stabilizer 2: metal deactivator and primary (phenolic) antioxidant containing 2',3-bis [[3-[3,5-di-tert-butyl-4-hydroxyphenyl]propionyl]]propionohydrazide, sold by BASF with trademark Irganox MD 1024.

The said materials are melt-blended in a co-rotating twin screw extruder Leistritz Micro 27, with screw diameter of 27mm and screw length/diameter ratio of 40 L/D, under the following conditions:

- extruder barrel of 180-210°C;
- screw rotation speed of 250 rpm;
- production rate of 15 kg/hour.

The amounts of the components and the properties of the so obtained final compositions are reported in Table 2.

Table I

| PB-1 | | |
|---|---|---|
| $T_m$ II | °C | - |
| $\Delta$ $H_{fus}$ | J/g | 0 |
| Shore A | | 60 |
| Shore D | | < 20 |
| Flexural Elastic Modulus | MPa | < 10 |
| MIE | g/10 min. | 1.4 |
| Tensile Strength at Break | MPa | 11 |
| Elongation at Break | % | 790 |

Table 2

| **Example No.** | | **Comp. 1** | **1** | **2** | **3** | **4** | **5** | **6** |
|---|---|---|---|---|---|---|---|---|
| PP | % wt. | 6 | 6 | 8.7 | 6.9 | 5.1 | - | 3 |
| HECO | % wt. | - | - | - | - | - | 6 | - |
| ENGAGE | % wt. | 30 | - | - | - | - | - | - |
| PB-1 | % wt. | - | 30 | 43.3 | 34.4 | 25.6 | 30 | 33 |
| Amount of (A) | % wt. | - | 27.9 | 40.27 | 32 | 23.8 | 27.9 | 30.7 |
| Amount of (b) | % wt. | - | 8.1 | 11.73 | 9.3 | 6.9 | 8.1 | 5.3 |
| MDH (Component B)) | % wt. | 59.7 | 59.7 | 44.7 | 54.7 | 64.7 | 59.7 | 59.7 |
| MDH/(A) | | - | 2.1 | 1.1 | 1.7 | 2.7 | 2.1 | 1.9 |
| MDH + (A) | % wt. | - | 87.6 | 85 | 86.7 | 88.5 | 87.6 | 90.4 |
| C. Agent | % wt. | 4 | 4 | 3 | 3.7 | 4.3 | 4 | 4 |
| Stabilizer 1 | % wt. | 0.15 | 0.15 | 0.15 | 0.15 | 0.15 | 0.15 | 0.15 |
| Stabilizer 2 | % wt. | 0.15 | 0.15 | 0.15 | 0.15 | 0.15 | 0.15 | 0.15 |
| **Properties** | | | | | | | | |
| Flexural Elastic Modulus | Mpa | 780 | 360 | 150 | 280 | 576 | 320 | 253 |
| Tensile Strength at Break | Mpa | 10 | 10.1 | 11 | 8.6 | 9.9 | 9.9 | 9.5 |
| Elongation at Break | % | 126 | 290 | 590 | 260 | 141 | 270 | 280 |
| Hardness Shore D | | 54.2 | 46.3 | 35.6 | 43.2 | 51.3 | 43.5 | 40.8 |
| MIE | g/10min | 0.16 | 0.6 | 0.61 | 0.37 | <0.1 | 0.1 | 0.49 |
| MET at 23 °C via DMTA | | 1070 | 480 | 205 | 395 | 730 | 440 | 405 |
| Notes: % weight = % by weight referred to the total weight of a) + b); "C. Agent " = Coupling Agent. | | | | | | | | |

## Claims

**1.** A polyolefin composition comprising:

a) from 85% to 98% by weight, preferably from 86% to 98% by weight, of a composition comprising:

A) a copolymer of butene-1 with ethylene having a copolymerized ethylene content of up to 18% by mole and no melting peak detectable at the DSC at the second heating scan; and
B) an inorganic filler, preferably selected from flame-retardant inorganic fillers;

the B)/A) weight ratio being from 0.3 to 4, preferably from 0.3 to 3, more preferably from 0.3 to 2.8, in particular from 0.3 to 2.2;
b) from 2% to 15% by weight, preferably from 2 % to 14% by weight, of an additional polyolefin different from A);

wherein the amounts of a) and b) refer to the total weight of a) + b) and the DSC second heating scan is carried out at a heating rate of 10°C per minute.

**2.** The polyolefin composition of claim 1, containing 20% by weight or more, preferably of 27% by weight or more of A) with respect to the total weight of the composition.

**3.** The polyolefin composition of claims 1 and 2, having a MIE equal to or higher than 0.05 g/10 min., preferably equal to or higher than 0.25 g/10 min., where MIE is the melt flow index at 190°C with a load of 2.16 kg, determined according to ISO 1133-2:2011.

**4.** The polyolefin composition of claims 1 and 2, having at least one of the following additional features:

- a Flexural Elastic Modulus equal to or lower than 600 MPa, preferably equal to or lower than 400 MPa, measured according to norm ISO 178:2019, 10 days after molding;
- a Shore D value equal to or lower than 52;
- a tensile elongation at break, measured according to ISO 527-1:2019, equal to or higher than 135%, preferably equal to or higher than 200%.

**5.** The polyolefin composition of claims 1 and 2, wherein the butene-1 copolymer component A) has a Shore A value equal to or lower than 80, preferably equal to or lower than 65.

**6.** The polyolefin composition of claims 1 and 2, wherein the butene-1 copolymer component A) has at least one of the following additional features:

- a MIE of from 0.5 to 3 g/10 min, preferably from 0.8 to 3 g/10 min;
- a lower limit of the copolymerized ethylene content of 12% by mole;
- a Shore D value equal to or lower than 20, in particular from 20 to 5;
- a Mw/Mn value, where Mw is the weight average molar mass and Mn is the number average molar mass, both measured by GPC, equal to or lower than 3, in particular from 3 to 1.5;
- a percentage of butene-1 units in form of isotactic pentads (mmmm%) greater than 80%, preferably equal to or greater than 85%, even more preferably equal to or greater than 90%;
- a tensile stress at break, measured according to ISO 527, of from 3 MPa to 20 MPa, preferably from 4 MPa to 13 MPa;
- a tensile elongation at break, measured according to ISO 527, of from 550% to 1000%; preferably from 700% to 1000%;
- an intrinsic viscosity (I.V.) equal to or higher than 1dl/g; preferably equal to or higher than 1.5 dl/g, wherein the upper limit is of 3 dl/g;
- a crystallinity of less than 30% measured via X-ray, preferably of less than 20%;
- a density of 0.895 $g/cm^3$ or less, preferably of 0.875 $g/cm^3$ or less;
- a content of xylene insoluble fraction at 0°C of less than 15% by weight,
- a Flexural Elastic Modulus equal to or lower than 20 MPa.

**7.** The polyolefin composition of claims 1 and 2, wherein component B) is selected from oxides, hydroxides, hydrated oxides, salts or hydrated salts of metals, preferably of Ca, Al or Mg, and mixtures thereof.

**8.** The polyolefin composition of claim 7, wherein component B) is selected from CaO, $TiO_2$, $Sb_2O_3$, ZnO, $Fe_2O_3$, $CaCO_3$, $BaSO_4$, $Mg(OH)_2$, $Al(OH)_3$, $Al_2O_3.3H_2O$, magnesium carbonate hydrate, $MgCO_3$, magnesium calcium carbonate hydrate, magnesium calcium carbonate and mixtures thereof.

**9.** The polyolefin composition of claims 1 and 2, wherein component b) is selected from:

1) propylene homopolymers;
2) copolymers of propylene with one or more comonomers selected from ethylene and $C_4$-$C_{10}$ alpha-olefins, wherein the comonomer content ranges from 0.05% to 20% by weight with respect to the total weight of the copolymer, or mixtures of said copolymers with propylene homopolymers 1);
3) heterophasic polyolefin compositions comprising i) a propylene homopolymer 1) and/or a copolymer 2), and an elastomeric fraction ii) comprising copolymers of ethylene with propylene and/or a $C_4$-$C_{10}$ alpha-olefin, optionally containing minor amounts of a diene.

**10.** The polyolefin composition of claims 1 and 2, further comprising a coupling agent c) in an amount of 0.1% to 10% by weight, referred to the total weight of a) + b) +c).

**11.** The polyolefin composition of claim 10, wherein the coupling agent is selected from homopolymers and copolymers of alpha-olefins containing polar groups, in particular carboxyl, hydroxyl, or ester groups.

**12.** A formed article comprising the polyolefin composition of claims 1 to 11.

**13.** The formed article according to claim 12, in form of insulating layer of electrically conductive wires and cables.

## Patentansprüche

**1.** Polyolefinzusammensetzung, umfassend:

a) 85 Gew.% bis 98 Gew.%, vorzugsweise 86 Gew.% bis 98 Gew.% einer Zusammensetzung, umfassend:

A) ein Copolymer von Buten-1 mit Ethylen, das einen Gehalt an copolymerisiertem Ethylen bis zu 18 Mol.% und keinen im DSC beim zweiten Heiz-Scan detektierbaren Schmelzpeak aufweist; und
B) einen anorganischen Füllstoff, der vorzugsweise ausgewählt ist aus flammhemmenden anorganischen Füllstoffen;

wobei das Gewichtsverhältnis von B)/A) 0,3 bis 4, vorzugsweise 0,3 bis 3, bevorzugter 0,3 bis 2,8, insbesondere 0,3 bis 2,2 beträgt;
b) 2 Gew.% bis 15 Gew.%, vorzugsweise 2 Gew.% bis 14 Gew.% eines zusätzlichen Polyolefins, das sich von A) unterscheidet;

wobei die Mengen an a) und b) sich auf das Gesamtgewicht von a) + b) beziehen, und der zweite DSC-Heiz-Scan mit einer Heizrate von 10 °C pro Minute durchgeführt wird.

**2.** Polyolefinzusammensetzung nach Anspruch 1, die 20 Gew.% oder mehr, vorzugsweise 27 Gew.% oder mehr von A) enthält, bezogen auf das Gesamtgewicht der Zusammensetzung.

**3.** Polyolefinzusammensetzung nach den Ansprüchen 1 und 2, die einen MIE gleich oder größer als 0,05 g/10 min., vorzugsweise gleich oder größer als 0,25 g/10 min. aufweist, wobei MIE der Schmelzflussindex bei 190 °C unter einer Last von 2,16 kg ist, bestimmt gemäß ISO 1133-2:2011.

**4.** Polyolefinzusammensetzung nach den Ansprüchen 1 und 2 mit mindestens einem der folgenden zusätzlichen Merkmale:

- einem Biegeelastizitätsmodul gleich oder kleiner als 600 MPa, vorzugsweise gleich oder kleiner als 400 MPa, gemessen gemäß der Norm ISO 178:2019, 10 Tage nach der Formung;
- einem Shore D-Wert gleich oder kleiner als 52;
- einer Bruchdehnung, gemessen gemäß ISO 527-1:2019, gleich oder größer als 135 %, vorzugsweise gleich oder größer als 200 %.

**5.** Polyolefinzusammensetzung nach den Ansprüchen 1 und 2, wobei die Buten-1-Copoly-merkomponente A) einen Shore A-Wert gleich oder kleiner als 80, vorzugsweise gleich oder kleiner als 65 aufweist.

**6.** Polyolefinzusammensetzung nach den Ansprüchen 1 und 2, wobei die Buten-1-Copoly-merkomponente A) mindestens eines der folgenden zusätzlichen Merkmale aufweist:

- einen MIE von 0,5 bis 3 g/10 min, vorzugsweise 0,8 bis 3 g/10 min;
- eine Untergrenze des Gehalts an copolymerisiertem Ethylen von 12 Mol.%;
- einen Shore D-Wert gleich oder kleiner als 20, insbesondere 20 bis 5;
- einen Mw/Mn-Wert, wobei Mw das durchschnittliche Molekulargewicht (Gewichtsmittel) ist und Mn das durchschnittliche Molekulargewicht (Zahlenmittel) ist, gleich oder kleiner als 3, insbesondere von 3 bis 1,5, wobei beide mittels GPC gemessen werden;
- einen Prozentsatz an Buten-1-Einheiten in Form von isotaktischen Pentaden (mmmm%) größer als 80 %, vorzugsweise gleich oder größer als 85 %, noch bevorzugter gleich oder größer als 90 %;
- eine Bruchspannung, gemessen gemäß ISO 527, von 3 MPa bis 20 MPa, vorzugsweise von 4 MPa bis 13 MPa;
- eine Bruchdehnung, gemessen gemäß ISO 527, von 550 % bis 1000 %, vorzugsweise von 700 % bis 1000 %;
- eine Grenzviskosität (LV.) gleich oder größer als 1 dl/g, vorzugsweise gleich oder größer als 1,5 dl/g, wobei die Obergrenze 3 dl/g beträgt;
- eine Kristallinität kleiner als 30 %, gemessen mittels Röntgen, vorzugsweise kleiner als 20 %;
- eine Dichte von 0,895 g/cm$^3$ oder weniger, vorzugsweise 0,875 g/cm$^3$ oder weniger;
- einen Gehalt an in Xylol bei 0 °C unlöslicher Fraktion von weniger als 15 Gew.%,
- einen Biegeelastizitätsmodul gleich oder kleiner als 20 MPa.

**7.** Polyolefinzusammensetzung nach den Ansprüchen 1 und 2, wobei Komponente B) ausgewählt ist aus Oxiden, Hydroxiden, hydratisierten Oxiden, Salzen oder hydratisierten Salzen von Metallen, vorzugsweise von Ca, Al und Mg, sowie Mischungen davon.

**8.** Polyolefinzusammensetzung nach Anspruch 7, wobei Komponente B) ausgewählt ist aus CaO, $TiO_2$, $Sb_2O_3$, ZnO, $Fe_2O_3$, $CaCO_3$, $BaSO_4$, $Mg(OH)_2$, $Al(OH)_3$, $Al_2O_3.3H_2O$, Magnesiumcarbonat-Hydrat, $MgCO_3$, Magnesiumcalciumcarbonat-Hydrat, Magnesiumcalciumcarbonat sowie Mischungen davon.

**9.** Polyolefinzusammensetzung nach Anspruch 1 und 2, wobei Komponente b) ausgewählt ist aus:

1) Propylenhomopolymeren;
2) Copolymeren von Propylen mit einem oder mehreren Comonomeren ausgewählt aus Ethylen und $C_4$- bis $C_{10}$-alpha-Olefinen, wobei der Comonomergehalt im Bereich von 0,05 Gew.% bis 20 Gew.% liegt, bezogen auf das Gesamtgewicht des Copolymers, oder Mischungen der Copolymere mit Propylenhomopolymeren 1);
3) heterophasischen Polyolefinzusammensetzungen, umfassend i) ein Propylenhomopolymer 1) und/oder ein Copolymer 2), und eine elastomere Fraktion ii), umfassend Copolymere von Ethylen mit Propylen und/oder einem $C_4$- bis $C_{10}$-alpha-Olefin, das gegebenenfalls geringe Mengen eines Diens enthält.

**10.** Polyolefinzusammensetzung nach den Ansprüchen 1 und 2, des Weiteren umfassend ein Kopplungsmittel c) in einer Menge von 0,1 Gew.% bis 10 Gew.%, bezogen auf das Gesamtgewicht von a) + b) + c).

**11.** Polyolefinzusammensetzung nach Anspruch 10, wobei das Kopplungsmittel ausgewählt ist aus Homopolymeren und Copolymeren von alpha-Olefinen, die polare Gruppen enthalten, insbesondere Carboxyl-, Hydroxyl- oder Estergruppen.

**12.** Formartikel, umfassend die Polyolefinzusammensetzung nach den Ansprüchen 1 bis 11.

**13.** Formartikel nach Anspruch 12 in Form einer Isolierschicht von elektrisch leitfähigen Drähten und Kabeln.

## Revendications

**1.** Composition polyoléfinique comprenant :

a) 85 % à 98 % en poids, de préférence 86 % à 98 % en poids, d’une composition comprenant :

A) un copolymère de butène-1 et d’éthylène présentant une teneur en éthylène copolymérisé de jusqu’à 18 % en mole et ne présentant aucun pic de fusion détectable au niveau de la DSC au niveau du second balayage chauffant ; et

B) une charge inorganique, de préférence choisie parmi les charges inorganiques ignifuges ;

le rapport pondéral B)/A) étant de 0,3 à 4, de préférence de 0,3 à 3, plus préférablement de 0,3 à 2,8, en particulier de 0,3 à 2,2 ;
b) 2 % à 15 % en poids, de préférence 2 % à 14 % en poids, d'une polyoléfine supplémentaire différente de A) ;

les quantités de a) et b) se rapportant au poids total de a) + b) et le second balayage chauffant de DSC étant effectué à une vitesse de chauffage de 10 °C par minute.

**2.** Composition polyoléfinique selon la revendication 1, contenant 20 % en poids ou plus, de préférence 27 % en poids ou plus de A) par rapport au poids total de la composition.

**3.** Composition polyoléfinique selon les revendications 1 et 2, présentant un MIE égal ou supérieur à 0,05 g/10 min, de préférence égal ou supérieur à 0,25 g/10 min, MIE étant l'indice de fluidité à chaud à 190 °C sous une charge de 2,16 kg, déterminé selon la norme ISO 1133-2:2011.

**4.** Composition polyoléfinique selon les revendications 1 et 2, présentant au moins l'une des caractéristiques supplémentaires suivantes :

- un module d'élasticité en flexion égal ou inférieur à 600 MPa, de préférence égal ou inférieur à 400 MPa, mesuré selon la norme ISO 178:2019, 10 jours après moulage ;
- une valeur Shore D égale ou inférieure à 52 ;
- un allongement en traction à la rupture, mesuré selon la norme ISO 527-1:2019, égal ou supérieur à 135 %, de préférence égal ou supérieur à 200 %.

**5.** Composition polyoléfinique selon les revendications 1 et 2, le constituant copolymère de butène-1 A) présentant une valeur Shore A égale ou inférieure à 80, de préférence égale ou inférieure à 65.

**6.** Composition polyoléfinique selon les revendications 1 et 2, le constituant copolymère de butène-1 A) présentant au moins l'une des caractéristiques supplémentaires suivantes :

- un MIE de 0,5 à 3 g/10 min, de préférence de 0,8 à 3 g/10 min ;
- une limite inférieure de la teneur en éthylène copolymérisé de 12 % en mole ;
- une valeur Shore D égale ou inférieure à 20, en particulier de 20 à 5 ;
- une valeur Mw/Mn, Mw étant la masse molaire moyenne en poids et Mn étant la masse molaire moyenne en nombre, toutes deux mesurées par CPG, égale ou inférieure à 3, en particulier de 3 à 1,5 ;
- un pourcentage de motifs de butène-1 sous forme de pentades isotactiques (mmmm %) supérieur à 80 %, de préférence égal ou supérieur à 85 %, encore plus préférablement égal ou supérieur à 90 % ;
- une contrainte de traction à la rupture, mesurée selon la norme ISO 527, de 3 MPa à 20 MPa, de préférence de 4 MPa à 13 MPa ;
- un allongement en traction à la rupture, mesuré selon la norme ISO 527, de 550 % à 1000 % ; de préférence de 700 % à 1000 % ;
- une viscosité intrinsèque (I.V.) égale ou supérieure à 1 dl/g ; de préférence égale ou supérieure à 1,5 dl/g, la limite supérieure étant de 3 dl/g ;
- une cristallinité inférieure à 30 % mesurée par rayons X, de préférence inférieure à 20 % ;
- une densité de 0,895 g/cm$^3$ ou moins, de préférence de 0,875 g/cm$^3$ ou moins ;
- une teneur en fraction insoluble dans le xylène à 0 °C inférieure à 15 % en poids,
- un module d'élasticité en flexion inférieur ou égal à 20 MPa.

**7.** Composition polyoléfinique selon les revendications 1 et 2, le constituant B) étant choisi parmi les oxydes, les hydroxydes, les oxydes hydratés, les sels ou les sels hydratés de métaux, de préférence de Ca, Al ou Mg, et leurs mélanges.

**8.** Composition polyoléfinique selon la revendication 7, le constituant B) étant choisi parmi CaO, $TiO_2$, $Sb_2O_3$, ZnO, $Fe_2O_3$, $CaCO_3$, $BaSO_4$, $Mg(OH)_2$, $Al(OH)_3$, $Al_2O_3.3H_2O$, le carbonate de magnésium hydraté, $MgCO_3$, le carbonate de calcium et de magnésium hydraté, le carbonate de calcium et de magnésium et leurs mélanges.

**9.** Composition polyoléfinique selon les revendications 1 et 2, le constituant b) étant choisi parmi :

1) les homopolymères de propylène ;
2) les copolymères de propylène et d'un ou de plusieurs comonomères choisis parmi l'éthylène et les alpha-oléfines en $C_4$-$C_{10}$, la teneur en comonomères étant située dans la plage de 0,05 % à 20 % en poids par rapport au poids total du copolymère, ou des mélanges desdits copolymères avec des homopolymères de propylène 1) ;
3) des compositions polyoléfiniques hétérophasiques comprenant i) un homopolymère de propylène 1) et/ou un copolymère 2) et une fraction élastomère ii) comprenant des copolymères d'éthylène et de propylène et/ou d'une alpha-oléfine en $C_4$-$C_{10}$, contenant éventuellement des quantités mineures d'un diène.

**10.** Composition polyoléfinique selon les revendications 1 et 2, comprenant en outre un agent de couplage c) en une quantité de 0,1 % à 10 % en poids, par rapport au poids total de a) + b) + c).

**11.** Composition polyoléfinique selon la revendication 10, l'agent de couplage étant choisi parmi les homopolymères et les copolymères d'alpha-oléfines contenant des groupes polaires, en particulier des groupes carboxyle, hydroxyle ou ester.

**12.** Article formé comprenant la composition polyoléfinique selon les revendications 1 à 11.

**13.** Article formé selon la revendication 12, sous forme de couche isolante de fils et câbles électriquement conducteurs.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2015055433 A
- WO 2012152803 A
- WO 2004099269 A
- WO 2009000637 A
- US 4399054 A
- EP 45977 A
- EP 361493 A
- EP 728769 A
- US 20060020096 A
- WO 98040419 A
- US 5324800 A
- EP 129368 A
- US 5145819 A
- EP 485823 A
- EP 472946 A
- EP 400333 A
- WO 03011962 A
- EP 530940 A


### Non-patent literature cited in the description


- **J.C. RANDAL.** *Macromol. Chem Phys.,* 1989, vol. C29, 201
- **M. KAKUGO ; Y. NAITO ; K. MIZUNUMA ; T. MIYATAKE.** *Macromolecules,* 1982, vol. 15, 1150
- **H.N. CHENG.** Polymer Physics Edition. *Journal of Polymer Science,* 1983, vol. 21, 57
- **C.J. CARMAN ; R.A. HARRINGTON ; C.E. WILKES.** *Macromolecules,* 1977, vol. 10, 536
- **ASAKURA T.** *Macromolecules,* 1991, vol. 24, 2334-2340
- **CHUJO R.** *Polymer,* 1994, vol. 35, 339